Europäisches Patentamt

European Patent Office

Office européen des brevets

(19)

(11) Veröffentlichungsnummer: **0 052 702**
**B1**

(12) **EUROPÄISCHE PATENTSCHRIFT**

(45) Veröffentlichungstag der Patentschrift:
**19.02.86**

(21) Anmeldenummer: **81106857.6**

(22) Anmeldetag: **02.09.81**

(51) Int. Cl.⁴: **B 60 Q  9/00,** B 60 K  28/00

(54) **Sicherheitsvorrichtung an Baumaschinen.**

(30) Priorität: **26.11.80  DE 3044485**

(43) Veröffentlichungstag der Anmeldung:
**02.06.82 Patentblatt 82/22**

(45) Bekanntmachung des Hinweises auf die Patenterteilung:
**19.02.86 Patentblatt 86/8**

(84) Benannte Vertragsstaaten:
**AT DE FR GB IT SE**

(56) Entgegenhaltungen:
**FR - A - 2 289 954**
**FR - A - 2 352 692**

(73) Patentinhaber: **CASE VIBROMAX GmbH & Co. KG,**
**Schlüterstrasse 13-19 Postfach 230149,**
**D-4000 Düsseldorf (DE)**

(72) Erfinder: **König, Fritz, Dr., Wotanstrasse 13,**
**D-5600 Wuppertal (DE)**

**Beschreibung**

Die Erfindung betrifft eine Sicherheitsvorrichtung an Baumaschinen, bei welcher

(a) mindestens ein Fühler vorgesehen ist, der auf die Bodenoberfläche etwa in der Aufstandsebene der Baumaschine anspricht,

(b) durch den Fühler bei Abfall der Bodenoberfläche gegenüber der Aufstandsebene ein Fehlersignal auslösbar ist.

Bei Baumaschinen, wie Vibrationswalzen od.dgl., können schwerwiegende Unfälle dadurch entstehen, dass die Baumaschine über eine Kante, beispielsweise einer Böschung, hinausfährt oder so nahe an die Kante heranfährt, dass das Erdreich abrutscht. Die Baumaschine stürzt dann über die Böschung od.dgl. ab, was zu schwerwiegenden Sach- und Personenschäden führen kann. Das ist besonders kritisch bei Baumaschinen mit Fahrerstand, bei denen der Maschinenführer auf der Maschine sitzt und mit dieser abstürzt. Weiterhin ist dieses Problem kritisch bei Vibrationswalzen. Wenn eine solche Walze zu nahe an eine Kante heranfährt, dann begünstigt die Vibration ein Abrutschen des Erdreichs.

Durch die DE-A-579 545 ist eine selbsttätige Absturzsicherung für auf Gleisketten fahrende schwere Geräte, wie Bagger, die am Rand von Böschungen entlangfahren, bekannt. Dort sind seitlich des Gleiskettenrahmens eine oder mehrere über die vorderen und hinteren Enden der Gleisketten hinausragende, waagerechte Wellen drehbar gelagert, auf denen über die Gleisketten hinausragenden Enden je ein Auslegerarm mit Laufrad und an deren inneren Ende je ein Nocken fest aufgekeilt ist, der beim Drehen der Welle einen Schalter zum Abschalten des Fahrantriebs betätigt. Wenn sich das Gerät in unzulässiger Weise einer Böschung nähert, dann läuft das Laufrad die Böschung hinab, so dass der Auslegerarm verschwenkt wird und die Welle verdreht. Dadurch wird der Fahrantrieb über den Nocken abgeschaltet. Diese Art der selbsttätigen Absturzsicherung erfordert Auslegerarme, die von dem Gerät zur Seite vorstehen. Solche Auslegerarme behindern jedoch das normale Arbeiten des Geräts und sind aus diesem Grund beispielsweise bei Strassenwalzen nicht anwendbar.

Durch die FR-A-2 352 692 ist eine Sicherheitsvorrichtung für bewegliche Arbeitsmaschinen bekannt, die ein Umkippen der Arbeitsmaschine, z.B. eines Traktors, verhindern soll. Diese Sicherheitsvorrichtung besteht aus einem Neigungsfühler, der auf die Neigung der Arbeitsmaschine anspricht. Wenn diese Neigung ein vorgegebenes Mass überschreitet, wird ein Warnsignal gegeben. Eine solche Sicherheitsvorrichtung ist nicht geeignet, etwa den Absturz eines Walzenfahrzeugs von einer Schüttung mit einer abrupten Steigungsänderung zu verhindern. Wenn dort die Arbeitsmaschine zu kippen beginnt, dann nützt das Warnsignal nichts mehr. Dann ist der Sturz nicht mehr aufzuhalten, weil die Arbeitsmaschine sich schon auf der Böschung befindet.

Die FR-A-2 289 954 zeigt eine optische Einrichtung für ein automatisches Lenksystem für fahrbare Arbeitsmaschinen. Es wird ein auf der Erde gebildeter optischer Kontrast durch einen über die Erde streichenden optischen Abtastlichtstrahl abgetastet. Das von der Erde reflektierte Licht wird erfasst und in ein elektrisches Lenksignal umgesetzt. Es geht dort darum, die Arbeitsmaschine längs einer durch einen Kontrast gegebenen Bahn zu lenken, nicht um eine Sicherung gegen Absturz von einer Böschung.

Der Erfindung liegt die Aufgabe zu Grunde, Gefahrensituationen, die durch Heranfahren der Baumaschine an eine Kante entstehen können, zu vermeiden, ohne dass das normale Arbeiten der Baumaschine behindert wird.

Erfindungsgemäss wird diese Aufgabe dadurch gelöst, dass

(c) der Fühler ein photoelektrischer Fühler ist und

(d) der photoelektrische Fühler einen V-förmigen Strahlengang aufweist, in welchem eine Lichtquelle durch ein erstes optisches System etwa in der Aufstandsebene der Baumaschine reell abgebildet wird und das reelle Bild seinerseits durch ein zweites optisches System, dessen Achse mit der Achse des ersten optischen Systems einen Winkel bildet, auf einen photoelektrischen Empfänger abgebildet wird.

Weitere Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 ist ein logisches Schaltbild und zeigt die Verknüpfung der Fühlersignale zu einem Fehlersignal und die dadurch ausgelösten Schaltvorgänge sowie eine Wiederstartvorrichtung.

Fig. 2 zeigt eine abgewandelte Ausführung des UND-Glieds bei der Schaltung von Fig. 1 mit Zugkraftfühlern, die auf seitliche Zugkräfte ansprechen,

Fig. 3 zeigt den Aufbau eines photoelektrischen, auf Bodenoberfläche ansprechenden Fühlers,

Fig. 4 ist ein Schaltbild und zeigt die Verarbeitung des Empfängersignals des photoelektrischen Fühlers zur Erzeugung eines Fühlersignals,

Fig. 5 zeigt eine Seitenansicht einer Baumaschine in Form einer Vibrationswalze und veranschaulicht die Möglichkeiten der Anordnung der Fühler,

Fig. 6 zeigt eine Einrichtung, welche das Ausüben seitlicher Zugkräfte auf die Baumaschine gestattet, die ein Abstürzen verhindern, und welche Zugkraftfühler enthält, die mit der Schaltung von Fig. 1 zusammenwirken.

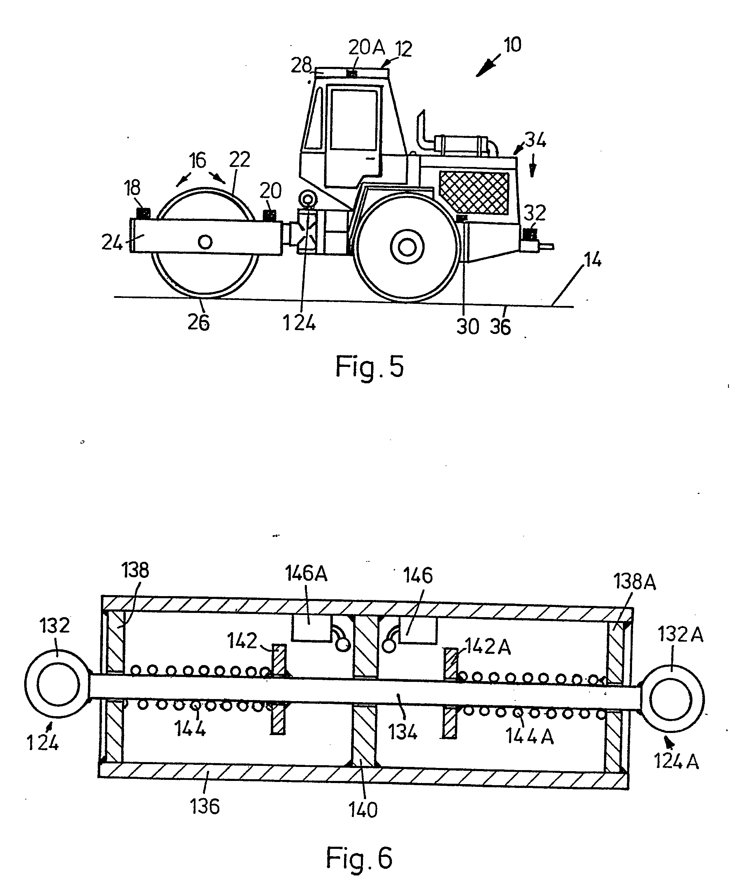

In Fig. 5 ist eine Baumaschine 10 in Gestalt einer Vibrationswalze mit Fahrerstand 12 dargestellt. Auf jeder Seite der Baumaschine 10 ist wenigstens ein Fühler vorgesehen, der auf Bodenoberfläche etwa in der Aufstandsebene 14 der Baumaschine 10 anspricht. Ein Fühler 16 enthält einen optischen Senderteil 18 und einen photoelektrischen Empfängerteil 20, die beiderseits eines Walzenkörpers 22 auf einem Walzenrahmen 24 angeordnet sind, so dass der Fühler 16 auf Bodenoberfläche in einem Bereich 26 in Höhe der Walzenkörperaufstandslinie anspricht. Statt des Empfängerteils 20 kann ein entsprechendes Empfängerteil 20A am oberen Kabinenlängsholm 28 mit dem Senderteil 18 zusammenwirken.

Ein Senderteil 30 und ein Empfängerteil 32 können einen Fühler 34 bilden, der auf Bodenoberfläche in einem Bereich 36 in der Verlängerung der Radaufstandslinien anspricht.

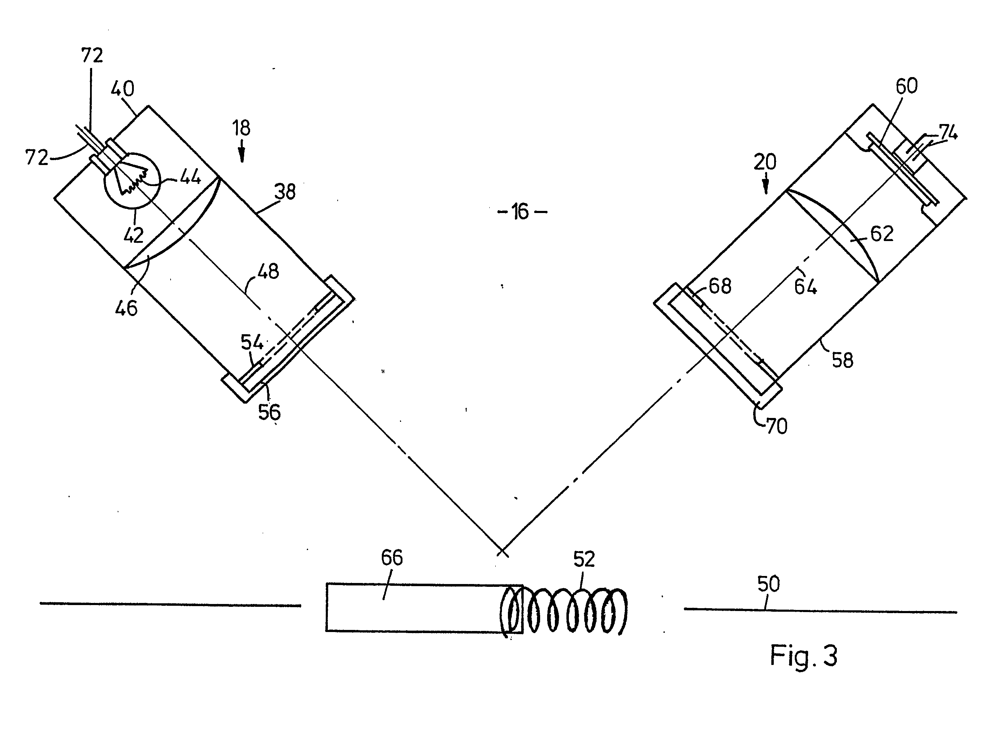

Ein solcher Fühler, z.B. der Fühler 16, ist in Fig. 3 dargestellt.

Der Senderteil 18 weist ein zylindrisches Gehäuse 38 auf. In der einen Stirnwand 40 des Gehäuses 38 sitzt eine Glühlampe 42 mit einer geraden Wendel 44. Die Wendel 44 wird durch ein erstes optisches Abbildungssystem in Form einer Linse 46 mit der optischen Achse 48 in einer Ebene 50 als Wendelbild 52 abgebildet. Auf der der Glühlampe 42 gegenüberliegenden Stirnseite des Gehäuses 38 sitzt eine Schlitzblende 54, die parallel zu der Wendelachse verläuft. Vor der Schlitzblende 54 ist eine durchsichtige Abdeckung 56 angeordnet.

Der Empfängerteil 20 weist ebenfalls ein zylindrisches Gehäuse 58 auf. An der einen Stirnseite des Gehäuses 58 ist ein Selen-Sperrschichtphotoelement 60 oder ein anderes aktives photoelektrisches Bauelement mit einer Empfängerfläche vorgesehen, die nach Grösse und Lage der Position der Wendel 44 im Gehäuse 38 entspricht. Durch ein zweites optisches Abbildungssystem in Form einer Linse 62 mit einer optischen Achse 64 wird ein Bereich 66 in der Ebene 50 auf den photoelektrischen Empfänger 60 abgebildet. Der Anschaulichkeit halber sind in Fig. 3 das Wendelbild 52 und der Bereich 66 um 90° verdreht in der Papierebene dargestellt. Tatsächlich liegen beide in der Ebene 50. An dem dem Empfänger 60 abgewandten Ende ist in dem Gehäuse 58 ebenfalls eine Schlitzblende 68 angeordnet. Das Gehäuse 58 ist durch eine durchsichtige Gehäuseabdeckung 70 abgeschlossen.

Wie aus Fig. 3 ersichtlich ist, bilden Senderteil 18 und Empfängerteil 20 einen V-förmigen Strahlengang. Wenn sich in der Ebene 50 eine remittierende Oberfläche, also die Bodenoberfläche befindet, dann wird durch das zweite Abbildungssystem 62 in der Ebene des photoelektrischen Empfängers 60 ein reelles Bild des von dem ersten Abbildungssystem 46 erzeugten Wendelbilds erzeugt.

Wie aus Fig. 3 ersichtlich ist, überlappen sich in der Ebene 50 das Wendelbild 52 und der vom photoelektrischen Empfänger 60 erfasste Bereich 66 nur teilweise. Liegt die remittierende Bodenoberfläche unter der Ebene 50, so nimmt die Überlappung schnell ab, so dass der photoelektrische Empfänger dann kein Signal mehr liefert. Liegt dagegen die Bodenoberfläche oberhalb der Ebene 50, so nimmt die Überlappung zu. Das Signal am photoelektrischen Empfänger 60 bleibt daher erhalten. Der Fühler 16 spricht somit durch Wegfall des Empfängersignals auf eine abfallende Fläche an. Er liefert jedoch noch kein Fehlersignal, wenn sich die Bodenoberfläche etwas über die Ebene 50 erhebt. Der Fühler 16 mit dem Senderteil 18 und dem Empfängerteil 20 wird so angeordnet, dass die Ebene 50 etwa der Aufstandsebene 14 entspricht.

Um den Einfluss von Fremdlicht auszuschalten, ist die Lichtquelle, also die Glühlampe 42 mit einer Wechselfrequenz moduliert. Das kann in der Weise geschehen, dass an die Anschlussklemmen 72 der Glühlampe 42 eine Rechteckspannung von fünf bis zehn Hertz gelegt wird. Der photoelektrische Empfänger 60 erhält dann neben einem Gleichlichtanteil und einer durch die Fahrt der Baumaschine 10 sowie die ungleichmässige Remission der Bodenoberfläche modulierten Lichtintensität auch einen Anteil, der mit der Wechselfrequenz der Lichtquelle moduliert ist. Das Ausgangssignal des photoelektrischen Empfängers 60 erscheint an Ausgangsklemmen 74. Um diesen Wechsellichtanteil des Empfängersignals von der Gleichlichtkomponente und den übrigen Störkomponenten zu trennen, ist, wie in Fig. 4 dargestellt ist, das Empfängersignal auf einen Ringmodulator 76 geschaltet, der mit der Wechselfrequenz gesteuert ist, mit der die Lichtquelle moduliert wird, also mit der Rechteckspannung, die an den Klemmen 72 der Glühlampe 42 anliegt. Der Ringmodulator 76 enthält vier Dioden 78, 80, 82 und 84, die gleichsinnig in einer Brücke angeordnet sind. Das Empfängersignal liegt über einem Eingangsübertrager 86 an zwei diametral gegenüberliegenden Punkten der Brücke, während das Steuersignal, also die Rechteckspannung über einen Eingangsübertrager 88 zwischen den beiden anderen Eckpunkten der Brücke anliegt. Eine Ausgangsspannung wird zwischen den Mittenanzapfungen 90, 92 der Eingangsübertrager 86 und 88 abgegriffen.

Am Ausgang des Ringmodulators 76 liegt ein RC-Glied bestehend aus einem Widerstand 94 und einem Kondensator 96 zur Glättung des Ringmodulator-Ausgangssignals. Die Gleichspannung am Kondensator 96 des RC-Gliedes ist zur Rauschunterdrückung über eine Diode 98 auf einen Ausgang 100 geschaltet, zu dem ein Widerstand 102 parallel liegt.

Die beschriebene Schaltung stellt eine Korrelationsschaltung dar, die ein Ausgangssignal liefert, wenn der photoelektrische Empfänger 60 über das Wendelbild 52 ein Wechselsignal mit der Wechselfrequenz der Glühlampe 42 liefert, wenn also der Fühler 16 oder 34 in der Aufstandsebene 14 der Baumaschine 10 oder oberhalb dieser Ebene Bodenoberfläche erfasst. Das Signal des Fühlers 16 oder 34 fällt weg, wenn die Bodenoberfläche an den Bereichen 26 oder 36 merklich unter die Aufstandsebene 14 der Baumaschine absinkt.

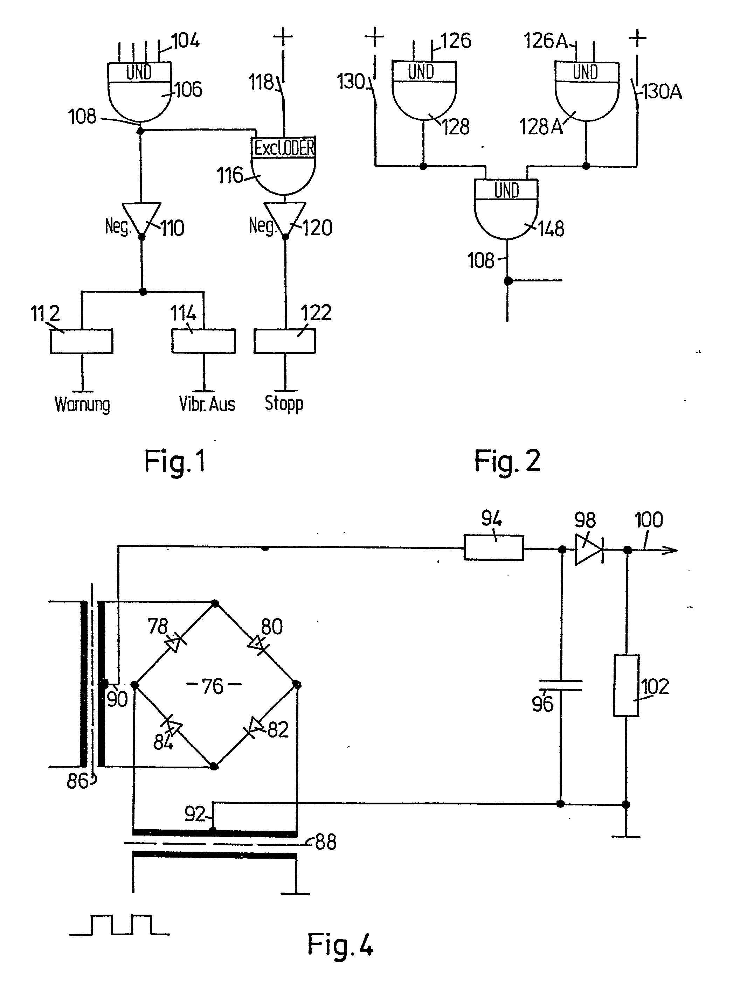

Die Ausgangssignale der verschiedenen Fühler 16, 34... liegen an Eingängen 104 eines UND-Glieds 106. Wenn eines dieser Ausgangssignale wegfällt, so geht das Ausgangssignal am Ausgang 108 des UND-Glieds 106 in den logischen Zustand «0». Dieser Zustand am Ausgang 108 stellt das «Fehlersignal» dar. Bei der in Fig. 1 dargestellten Ausführungsform ist durch das Fehlersignal ein optisches oder akustisches Warnsignal auslösbar.

Weiterhin ist die Baumaschine durch das Fehlersignal stillsetzbar. Es ist eine durch einen gesonderten Schlüssel betätigbare Wiederstartvorrichtung vorgesehen, durch welche wenigstens der Fahrantrieb der durch das Fehlersignal stillgesetzten Baumaschine 10 wieder einschaltbar ist.

Zu diesem Zweck schaltet das durch einen Inverter 110 negierte Ausgangssignal des UND-Glieds 106 über ein Relais 112 eine optische oder akustische Warnvorrichtung ein. Bei einer mit einer Rüttelvorrichtung arbeitenden Baumaschine, beispielsweise der in Fig. 5 dargestellten Vibrationswalze, schaltet das negierte Ausgangssignal des UND-Glieds 106 ausserdem über ein Schaltglied 114 die Rüttelvorrichtung ab.

Weiterhin liegt das Fehlersignal vom Ausgang 108 an einem Eingang eines EXCLUSIV-ODER-Glieds 116 an. An dem anderen Eingang des EXCLUSIV-ODER-Glieds 116 liegt eine Spannung über einen Kontakt 118 an, der durch den Schlüssel der Wiederstartvorrichtung im schliessenden Sinne betätigbar ist. Das Ausgangssignal des EXCLUSIV-ODER-Glieds 116 steuert über einen Inverter 120 ein Relais 122 an, durch welches die Baumaschine ausschaltbar ist.

Das EXCLUSIV-ODER-Glied 116 liefert genau dann ein Signal an seinem Ausgang, wenn entweder ein Signal am Ausgang des UND-Glieds 106 erscheint und der Kontakt 118 der Wiederstartvorrichtung geöffnet ist oder das Ausgangssignal am Ausgang 108 des UND-Glieds 106 «0» und der Kontakt 118 geschlossen ist. Der Normalfall ist, dass der Kontakt 118 geöffnet ist und an sämtlichen Eingängen 104 des UND-Gliedes 106 Fühlersignale anliegen, so dass der Ausgang 108 des UND-Glieds 106 im Zustand «L» ist. In diesem Falle liefert das EXCLUSIV-ODER-Glied 116 das Signal «L» an seinem Ausgang, welches durch den Inverter 120 zu «0» negiert wird. Das Relais 122 ist abgefallen, und die Baumaschine ist in Betrieb. Fällt eines der Fühlersignale an den Eingängen 104 aus, so erscheint am Ausgang 108 des UND-Glieds 106 das Fehlersignal «0». Es liegt jetzt an beiden Eingängen des EXCLUSIV-ODER-Glieds 116 kein Signal, d.h. das Signal «0» an, so dass dessen Ausgang «0» wird. Dieses Signal wird zu «L» negiert und bewirkt ein Anziehen des Relais 122, wodurch die Baumaschine stillgesetzt wird.

Durch die Wiederstartvorrichtung kann der Kontakt 118 geschlossen werden. Dadurch wird der Ausgang des EXCLUSIV-ODER-Glieds 116 wieder «L». Das Relais 122 fällt ab und setzt die Baumaschine wieder in Betrieb.

Zum Betätigen der Wiederstartvorrichtung kann ein gesonderter Schlüssel vorgesehen werden, der zweckmässigerweise von einer aufsichtführenden Person oder dem Sicherheitsbeauftragten des Betreibers in Verwahrung genommen werden sollte. Das EXCLUSIV-ODER-Glied 116 stellt auch sicher, dass nicht etwa die Baumaschine bei ständig geschlossenem Kontakt 118 betrieben werden kann. In diesem Falle würde normalerweise an beiden Eingängen des EXCLUSIV-ODER-Glieds 116 das Signal «L» anliegen, so dass die Baumaschine stillgesetzt würde.

Die Vibrationseinrichtung ist bei Auftreten eines Fehlersignals am Ausgang 108 auf jeden Fall stillgesetzt, auch wenn der Fahrantrieb der Baumaschine über den Kontakt 118 wieder eingeschaltet wird.

Die Wiederstartvorrichtung gestattet es, die Baumaschine wieder in Betrieb zu setzen und aus der Gefahrenzone herauszubringen.

Für solche Fälle und um ein Arbeiten der Baumaschine auch längs einer Kante zu ermöglichen, kann an wenigstens einer Stelle der Baumaschine 10 eine Einrichtung 124 vorgesehen sein, welche den Angriff einer Zugkraft auf die Baumaschine 10 gestattet. Es kann dann beim Arbeiten längs einer Kante od.dgl. die Baumaschine über ein Seil mit einer zweiten, parallel fahrenden Baumaschine verbunden und über dieses Seil, z.B. durch ein angehängtes Gewicht, eine von der Böschungskante weg gerichtete Zugkraft auf den Zugkraftfühler 146 oder 146A der Einrichtung 124 oder 124A ausgeübt werden. Dieser spricht bei Erreichen einer vorgegebenen Mindest-Zugkraft an. Der Zugkraftfühler kann dann so geschaltet werden, dass das Fehlersignal von den Fühlern 16, 34 auf der der Böschung zugewandten Seite der Baumaschine 10 nicht auslösbar ist, wenn er angesprochen hat. Dies kann durch die in Fig. 2 dargestellte Schaltung erreicht werden. Dort liegen die Ausgangssignale der Fühler 16, 34 einer Seite an den Eingängen 126 eines UND-Gliedes 128 an. Der Ausgang des UND-Gliedes 128 und das Ausgangssignal des Zugkraftfühlers, das hier durch einen Kontakt 130 symbolisiert ist, sind zusammengeschaltet. Wenn der Zugkraftfühler angesprochen hat, der Kontakt 130 also geschlossen ist, dann tritt kein Fehlersignal auf, auch wenn ein Fühlersignal am UND-Glied 128 wegfällt.

Vorzugsweise ist für jede Seite der Baumaschine 10 eine Einrichtung 124 für den Angriff einer Zugkraft mit einem zugehörigen Fühler angeordnet. Besonders vorteilhaft ist es, zwei Einrichtungen 124 und 124A für beide Maschinenseiten in einer Konstruktion zu vereinigen, wie in Fig. 6 dargestellt.

Dort weisen die Einrichtungen 124, 124A für den Angriff einer Zugkraft je ein Auge oder einen Haken 132, 132A auf, die durch eine sich quer zu der Baumaschine 10 erstreckende Stange 134 miteinander verbunden sind. Die Stange 134 ist in einem an der Baumaschine 10 befestigten Gehäuse 136 in zwei Stirnwänden 138 und 138A und einer Zwischenwand 140 verschiebbar geführt. Auf der Stange 134 sind beiderseits der Zwischenwand 140 Scheiben 142, 142A im Abstand voneinander befestigt. Zwischen jeder Stirnwand 138, 138A und der benachbarten Scheibe 142, 142A ist eine vorgespannte Druckfeder 144, 144A angeordnet. Die Zugkraftfühler werden von Schaltern 146, 146A gebildet, die durch die Scheiben 142A bzw. 142 bei deren Annäherung an die Zwischenwand 140 betätigbar sind.

In Fig. 2 sind die Zugkraftfühler durch den Kontakt 130 bzw. einen Kontakt 130A dargestellt. Die Fühlersignale von den Fühlern auf der der Einrichtung 132A abgewandten Seite liegen an Eingängen 126A eines UND-Gliedes 128A an. Das Fühlersignal über den Schalter 130A und der Ausgang des UND-Gliedes 128A sind ebenfalls zusammengeschaltet. Die zusammengeschalteten Signale liegen an den beiden Eingängen eines UND-Gliedes 148 an, dessen Ausgang 108' dem Ausgang 108 von Fig. 1 entspricht. Die übrige Schaltung ist die gleiche wie in Fig. 1.

Wenn über das Auge 132 oder 132A eine Zugkraft auf die Baumaschine 10 ausgeübt wird, die den Zugkraftfühler auf einer Seite zum Ansprechen bringt, dann können die Fühlersignale auf der gegenüberliegenden Seite wegfallen, ohne dass dadurch die Baumaschine stillgesetzt wird. Wenn also beispielsweise der Kontakt 130 geschlossen ist, bleibt das Signal «L» an dem linken Eingang des UND-Glieds 148 erhalten, auch wenn ein Fühlersignal an einem Eingang 126 wegfällt. Der linke Eingang des UND-Gliedes 148 liegt über den Kontakt 130 auf jeden Fall an Spannung. Die Fühlersignale auf der anderen Seite, wo die Zugkraft wirkt, müssen natürlich vorhanden sein. Der Kontakt 130A ist geöffnet, und es muss daher das UND-Glied 128A das Signal «L» liefern.

Die Einzelteile der Einrichtung 124, 124A, ihre Befestigung auf der Baumaschine 10 sowie das zur zweiten Baumaschine führende Zugseil sind in ihrer Festigkeit so ausgelegt, dass bei einem Abrutschen der Baumaschine 10 über die Böschungskante die erforderlichen Haltekräfte mit ausreichender Sicherheit übertragen werden.

**Patentansprüche**

1. Sicherheitsvorrichtung an Baumaschinen, bei welcher
(a) mindestens ein Fühler (16 oder 34) vorgesehen ist, der auf die Bodenoberfläche etwa in der Aufstandsebene (14) der Baumaschine (10) anspricht,
(b) durch den Fühler (16 oder 34) bei Abfall der Bodenoberfläche gegenüber der Aufstandsebene (14) ein Fehlersignal auslösbar ist,
dadurch gekennzeichnet, dass
(c) der Fühler (16 oder 34) ein photoelektrischer Fühler ist und
(d) der photo-elektrische Fühler (16 oder 34) einen V-förmigen Strahlengang aufweist, in welchem eine Lichtquelle (44) durch ein erstes optisches System (46) etwa in der Aufstandsebene (14) der Baumaschine (10) reell abgebildet wird und das reelle Bild (52) seinerseits durch ein zweites optisches System (62), dessen Achse (64) mit der Achse (48) des ersten optischen Systems (46) einen Winkel bildet, auf einen photoelektrischen Empfänger (60) abgebildet wird.

2. Sicherheitsvorrichtung nach Anspruch 1, dadurch gekennzeichnet, dass
(a) die Lichtquelle (44) mit einer Wechselfrequenz moduliert ist und
(b) ein Ausgangssignal des Fühlers (16, 34) aus der Komponente des Empfängersignals mit dieser Wechselfrequenz abgeleitet ist.

3. Sicherheitsvorrichtung nach Anspruch 2, dadurch gekennzeichnet, dass
(a) das Empfängersignal auf einen mit einer Wechselfrequenz gesteuerten Ringmodulator (76) geschaltet ist,
(b) am Ausgang des Ringmodulators (76) ein RC-Glied (94, 96) zur Glättung des Ringmodulator-Ausgangssignals angeordnet ist und
(c) die Gleichspannung am Kondensator (96) des RC-Glieds (94, 96) zur Rauschunterdrückung über eine Diode (98) auf einen Ausgang (100) geschaltet ist, zu dem ein Widerstand (102) parallelliegt.

4. Sicherheitsschaltung nach einem der Ansprüche 1 bis 3, dadurch gekennzeichnet, dass sich das Bild (52) der Lichtquelle (44) und der erfasste Bereich (66) des Empfängers (60) in der Aufstandsebene (14) der Baumaschine (10) so überlappen, dass der Empfänger (60) auch dann remittiertes Licht von dem Bild (52) der Lichtquelle (44) empfängt, wenn die Bodenoberfläche im Bereich des Fühlers sich oberhalb der Aufstandsebene (14) befindet.

5. Sicherheitsschaltung nach Anspruch 1, dadurch gekennzeichnet, dass die Baumaschine (10) durch das Fehlersignal stillsetzbar ist und eine Wiederstartvorrichtung (118) vorgesehen ist, durch welche der Fahrantrieb der durch das Fehlersignal stillgesetzten Baumaschine (10) wiedereinschaltbar ist.

6. Sicherheitsschaltung nach Anspruch 5, dadurch gekennzeichnet, dass die Wiederstartvorrichtung durch einen gesonderten Schlüssel (118) betätigbar ist.

7. Sicherheitsschaltung nach Anspruch 5, dadurch gekennzeichnet, dass
(a) das Fühlersignal an einem Eingang eines EXCLUSIV-ODER-Glieds (116) anliegt,
(b) an dem anderen Eingang des EXCLUSIV-ODER-Glieds (116) Spannung über einen Kontakt (118) anliegt, der durch den Schlüssel der Wiederstartvorrichtung im schliessenden Sinne betätigbar ist,
(c) der Ausgang des EXCLUSIV-ODER-Glieds (116) über einen Inverter (120) ein Relais (122) ansteuert, durch welches die Baumaschine (10) ausschaltbar ist.

8. Sicherheitsschaltung nach Anspruch 1, dadurch gekennzeichnet, dass
(a) an wenigstens einer Seite der Baumaschine (10) eine Einrichtung (124) vorgesehen ist, welche den Angriff einer seitlichen Zugkraft auf die Baumaschine (10) gestattet,
(b) an dieser Einrichtung ein Zugkraftfühler (146, 146A) vorgesehen ist, welcher bei Überschreiten eines vorgegebenen Wertes der Zugkraft anspricht, und
(c) das Fehlersignal von den Fühlern, die auf der der Richtung der auslösenden Zugkraft entgegengesetzten Seite der Baumaschine (10) angeordnet sind, nicht auslösbar ist, wenn der Zugkraftfühler (146, 146A) angesprochen hat.

9. Sicherheitsschaltung nach Anspruch 8, dadurch gekennzeichnet, dass
(a) die Ausgangssignale der Fühler einer Seite an den Eingängen eines UND-Glieds (128) anliegen und

(b) der Ausgang des UND-Glieds (128) und das
Ausgangssignal des Zugkraftfühlers (146) zusammengeschaltet sind.

10. Sicherheitsschaltung nach Anspruch 8, dadurch gekennzeichnet, dass je eine Einrichtung
(124, 124A) für den Angriff einer Zugkraft mit einem zugehörigen Fühler (146, 146A) auf jeder Seite der Baumaschine (10) angeordnet ist.

11. Sicherheitsschaltung nach Anspruch 10, dadurch gekennzeichnet, dass

(a) die Einrichtungen (124, 124A) für den Angriff
einer Zugkraft je ein Auge (132, 132A) oder einen
Haken aufweisen, die durch eine sich quer zu der
Baumaschine erstreckende Stange (134) miteinander verbunden sind,

(b) die Stange (134) in einem Gehäuse (136) in
zwei Stirnwänden (138, 138A) und einer Zwischenwand (140) verschiebbar geführt ist,

(c) auf der Stange (134) beiderseits der Zwischenwand (140) Scheiben (142, 142A) im Abstand
voneinander befestigt sind,

(d) zwischen jeder Stirnwand (138, 138A) und
der benachbarten Scheibe (142, 142A) eine vorgespannte Druckfeder (144, 144A) angeordnet ist und

(e) die Zugkraftfühler von Schaltern (146, 146A)
gebildet werden, die durch die Scheiben (142,
142A) bei deren Annäherung an die Zwischenwand (140) betätigbar sind.

12. Sicherheitsschaltung nach Anspruch 10 oder
11, dadurch gekennzeichnet, dass

(a) die Ausgangssignale der Fühler einer Seite
an den Eingängen (126) eines ersten UND-Glieds
(128) anliegen,

(b) die Ausgangssignale der Fühler der anderen Seite an den Eingängen (126A) eines zweiten
UND-Glieds (128A) anliegen und

(c) an den Eingängen eines dritten UND-Glieds
(148) die Ausgänge des ersten und des zweiten
UND-Glieds (128, 128A) sowie mit diesen zusammengeschaltet die Ausgangssignale der Zugkraftfühler (146, 146A) der den Angriff einer Zugkraft
gestattenden, auf den beiden Seiten der Baumaschine (10) angeordneten Einrichtungen (124,
124A) anliegen.

**Claims**

1. Safety device with construction machines, in
which

(a) at least one sensor (16 or 34) is provided,
which responds to the ground surface approximately in the ground contact surface (14) of the
construction machine (10),

(b) the sensor (16 or 34) is adapted to trigger an
error signal with a downward slope of the ground
surface relative to the ground contact surface (14),
characterized in that

(c) the sensor (16 or 34) is a photoelectric sensor, and

(d) the photoelectric sensor (16 and 34) has a
V-shaped path of rays, in which a light source (44)
is really imaged approximately in the ground contact surface (14) of the construction machine (10) through a first optical system (46) and the real
image (52) is then imaged upon a photoelectric
detector (60) through a second optical system (62),
the axis (64) of which forms an angle with the axis
(48) of the first optical system (46).

2. Safety device as set forth in claim 1,
characterized in that

(a) the light source (44) is modulated with a
modulating frequency, and

(b) an output signal of the sensor (16, 34) is
derived from the component of the detector signal
having this modulating frequency.

3. Safety device as set forth in claim 2,
characterized in that

(a) the detector signal is applied to a ring modulator (76) controlled with a modulating frequency,

(b) a RC-network (94, 96) is arranged at the
output of the ring modulator (76) for smoothing the
ring modulator output signal, and

(c) the d.c. voltage at the capacitor (96) of the
RC-network (94, 96) is applied to an output (100)
through a diode (98) for noise supression, to which
output (100) a resistor (102) is connected in parallel.

4. Safety circuit as set forth in anyone of the
claims 1 to 3, characterized in that the image (52)
of the light source (44) and the detected area (66)
of the detector (60) overlap in the ground contact
surface (14) of the construction machine (10), such
that the detector (60) receives diffusedly reflected
light from the image (52) of the light source (44)
even when the ground surface in the area of the
sensor is located above the ground contact surface (14).

5. Safety circuit as set forth in claim 1,
characterized in that the error signal is adapted to
stop the construction machine (10), and a restarting device (118) is provided, which is adapted to
restart the travelling drive of the construction machine (10) stopped by the error signal.

6. Safety circuit as set forth in claim 5,
characterized in that a separate key (118) is adapted to actuate the restarting device.

7. Safety circuit as set forth in claim 5,
characterized in that

(a) the sensor signal is applied to an input of an
exclusive OR-gate (116),

(b) voltage is applied to the other input of the
exclusive OR-gate (116) through a contact (118),
which is adapted to be actuated in closing sense
by means of the key of the restarting device,

(c) the output of the exclusive OR-gate (116)
energizes a relay (122) through an inverter (120),
which relay (122) is adapted to stop the construction machine (10).

8. Safety device as set forth in claim 1,
characterized in that

(a) a device (124) is provided at at least one
side of the construction machine (10), which permits application of a lateral tractive force on the
construction machine (10),

(b) a tractive force sensor (146, 146A) is
provided at this device, which sensor (146, 146A)
responds when a predetermined value of the tractive force is exceeded, and

(c) the error signal from the sensors arranged on the side of the construction machine (10) opposed to the direction of the releasing tractive force cannot be triggered when the tractive force sensor (146, 146A) has responded.

9. Safety device as set forth in claim 8, characterized in that

(a) the output signals of the sensors of one side are applied to the inputs of an AND-gate (128), and

(b) the output of the AND-gate (128) and the output signal of the tractive force sensor (146) are interconnected.

10. Safety device as set forth in claim 8, characterized in that one device (124, 124A) for the application of the tractive force is arranged together with an associated sensor (146, 146A) on each side of the construction machine (10).

11. Safety device as set forth in claim 10, characterized in that

(a) the devices (124, 124A) for the application of the tractive force have a lug (132, 132A) or a hook each, which are interconnected through a bar (134) extending transversely to the construction machine,

(b) the bar (134) is slidably guided in a housing (136) in two front walls (138, 138A) and a partition (140),

(c) spaced discs (142, 142A) are attached to the bar (134) on both sides of the partition (140),

(d) a biassed compression spring (144, 144A) is arranged between each front wall (138, 138A) and the adjacent disc (142, 142A), and

(e) the tractive force sensors are formed by switches (146, 146A), which are arranged to be actuated by the discs (142, 142A) when they approach the partition (140).

12. Safety device as set forth in claim 10 or 11, characterized in that

(a) the output signals of the sensors of one side are applied to the inputs (126) of a first AND-gate (128),

(b) the output signals of the sensors of the other side are applied to the inputs (126A) of a second AND-gate (128A), and

(c) the outputs of the first and the second AND-gates (128, 128A) and, interconnected therewith, the output signals of the tractive force sensors (146, 146A) of the devices (124, 124A) permitting the application of a tractive force and arranged on both sides of the construction machine (10) are applied to the inputs of a third AND-gate (148).

**Revendications**

1. Dispositif de sécurité dans des machines de construction dans lequel

(a) est prévu au moins un capteur (16 ou 34) qui répond à la surface du sol approximativement dans la surface de contact au sol (14) de la machine de construction (10),

(b) le capteur (16 ou 34) peut déclencher un signal d'erreur en cas de pente de la surface du sol par rapport à la surface de contact au sol (14), caractérisé par le fait que

(c) le capteur (16 ou 34) est un capteur photoélectrique, et

(d) le capteur photoélectrique (16 ou 34) présente une marche de rayons en forme de V dans laquelle une source lumineuse (44) est réelement reproduite approximativement dans la surface de contact au sol (14) de la machine de construction (10) par un premier système optique (46), et l'image réelle (52) est ensuite reproduite sur un détecteur photoélectrique (60) par un deuxième système optique (62) dont l'axe (64) forme un angle avec l'axe (48) du premier système optique (46).

2. Dispositif de sécurité selon la revendication 1, caractérisé par le fait que

(a) la source lumineuse (44) est modulée avec une fréquence modulatrice, et

(b) un signal de sortie du capteur (16, 34) est dérivé de la composante du signal du détecteur avec cette fréquence modulatrice.

3. Dispositif de sécurité selon la revendication 2, caractérisé par le fait que

(a) le signal du détecteur est appliqué sur un modulateur toroïdal (76) commandé avec une fréquence modulatrice,

(b) un circuit RC (94, 96) est disposé sur la sortie du modulateur toroïdal (76) afin de lisser le signal de sortie du modulateur toroïdal, et

(c) la tension continue au condensateur (96) du circuit RC (94, 96) est appliquée par l'intermédiaire d'une diode (98) à une sortie (100) à laquelle une résistance (102) est connectée en parallèle.

4. Circuit de sécurité selon l'une quelconque des revendications 1 à 3, caractérisé par le fait que l'image (52) de la source lumineuse (44) et le domaine détecté (66) du détecteur (60) se chevauchent dans la surface de contact au sol (14) de la machine de construction (10) de sorte que le détecteur (60) reçoit de la lumière reflétée de manière diffuse depuis l'image (52) de la source lumineuse (44) même lorsque la surface du sol dans le domaine du détecteur se trouve en dessus de la surface de contact au sol (14).

5. Circuit de sécurité selon la revendication 1, caractérisé par le fait que la machine de construction (10) peut être arrêtée par le signal d'erreur, et qu'un dispositif de redémarrage (118) est prévu par lequel la commande de roulement de la machine de construction (10) arrêtée par le signal d'erreur peut être de nouveau être mise en marche.

6. Circuit de sécurité selon la revendication 5, caractérisé par le fait que le dispositif de redémarrage peut être actionné par une clef séparée (118).

7. Circuit de sécurité selon la revendication 5, caractérisé par le fait que

(a) le signal du capteur est appliqué à une entrée d'un élément OU exclusif (116),

(b) une tension est appliquée à l'autre entrée de l'élément OU exclusif (116) par l'intermédiaire d'un contact (118) qui peut être actionné dans le sens fermant par la clef du dispositif de redémarrage,

(c) la sortie de l'élément OU exclusif (116) commande, par l'intermédiaire d'un inverseur (120), un relais (122) qui peut arrêter la machine de construction (10).

8. Circuit de sécurité selon la revendication 1, caractérisé par le fait que

(a) un dispositif (124) est prévu sur au moins l'un des côtés de la machine de construction (10), ce dispositif permettant l'application d'une force de traction latérale sur la machine de construction (10),

(b) un capteur de force de traction (146, 146A) est prévu sur ce dispositif, ce capteur répondant en cas de dépassement d'une valeur prédéterminée de la force de traction, et

(c) le signal d'erreur des capteurs disposés sur le côté de la machine de construction (10) opposé à la direction de la force de traction relâchante, ne peut être déclenché lorsque le capteur de force de traction (146, 146A) a répondu.

9. Circuit de sécurité selon la revendication 8, caractérisé par le fait que

(a) les signaux de sortie des capteurs de l'un des côtés sont appliqués aux entrées d'un élément ET (128), et

(b) la sortie de l'élément ET (128) et le signal de sortie du capteur de force de traction (146) sont interconnectés.

10. Circuit de sécurité selon la revendication 8, caractérisé par le fait qu'un dispositif à la fois (124, 124A) pour l'application d'une force de traction avec un capteur approprié (146, 146A) est prévu sur chaque côté de la machine de construction (10).

11. Circuit de sécurité selon la revendication 10, caractérisé par le fait que

(a) les dispositifs (124, 124A) pour l'application d'une force de traction ont chacun un œil (132, 132A) ou un crochet qui sont reliés par une barre (134) s'étendant transversalement à la machine de construction,

(b) la barre (134) est guidée de manière déplaçable dans un boîtier (136) dans deux parois frontales (138, 138A) et une paroi intermédiaire (140),

(c) des disques espacés (142, 142A) sont fixés sur la barre (134) des deux côtés de la paroi intermédiaire (140),

(d) un ressort de pression précontraint (144, 144A) est disposé entre chaque paroi frontale (138, 138A) et le disque adjacent (142, 142A), et

(e) les capteurs de force de traction sont formés par des commutateurs (146, 146A) qui peuvent être actionnés par les disques (142, 142A) lorsqu'ils s'approchent de la paroi intermédiaire (140).

12. Circuit de sécurité selon la revendication 10 ou 11, caractérisé par le fait que

(a) les signaux de sortie des capteurs de l'un des côtés sont appliqués aux entrées (126) d'un premier élément ET (128),

(b) les signaux de sortie des capteurs de l'autre côté sont appliqués aux entrées (126A) d'un deuxième élément ET (128A), et

(c) les sorties du premier et du deuxième élément ET (128, 128A) et, interconnectés avec celles-ci, les signaux de sortie des capteurs de force de traction (146, 146A) des dispositifs (124, 124A) permettant l'application d'une force de traction et disposés sur les deux côtés de la machine de construction (10), sont appliqués aux entrées d'un troisième élément ET (148).

Fig.1

Fig. 2

Fig.4

Fig. 3

0 052 702

Fig. 5

Fig. 6